Europäisches Patentamt

European Patent Office

Office européen des brevets

(19)

(11) **EP 0 910 186 B1**

(12) **FASCICULE DE BREVET EUROPEEN**

(45) Date de publication et mention
de la délivrance du brevet:
**27.06.2001 Bulletin 2001/26**

(51) Int Cl.⁷: **H04B 10/18**

(21) Numéro de dépôt: **98402565.0**

(22) Date de dépôt: **15.10.1998**

(54) **Réparation de systèmes sous-marins de transmision à fibre optique à signaux solitons et à multiplexage de longueur d'onde**

Reparierung von Soliton und WDM faseroptischen Unterwasserübertragungssystemen

Soliton and wavelength division multiplexed optical fibre submarine transmission systems repair

(84) Etats contractants désignés:
**DE ES GB IT SE**

(30) Priorité: **16.10.1997 FR 9712984**

(43) Date de publication de la demande:
**21.04.1999 Bulletin 1999/16**

(73) Titulaire: **ALCATEL**
**75008 Paris (FR)**

(72) Inventeur: **Leclerc, Olivier**
**91240 Saint Michel sur Orge (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 786 877**

• LECLERC ET AL: "Investigation into the robustness of 100 Gbit/s (5x20 Gbit/s) regenerated WDM soliton transoceanic transmission to line breaks and repairs" ELECTRONICS LETTERS., vol. 33, no. 18, 28 août 1997, pages 1568-1570, XP002068306 STEVENAGE GB

• PITEL F ET AL: "EXPERIMENTAL ASSESSMENT OF WAVELENGHT MARGIN IN 20 GBIT/S WDM SOLITON SYSTEM OVER 18MM DISTANCE" ELECTRONICS LETTERS, vol. 32, no. 21, 10 octobre 1996, pages 1957-1959, XP000683514

EP 0 910 186 B1

## Description

La présente invention a pour objet un procédé de réparation pour système sous-marin de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit.

Elle concerne également un dispositif de réparation d'un tel système de transmission.

La transmission d'impulsions solitons ou solitons dans la partie d'une fibre optique à dispersion anormale est un phénomène connu. Les solitons sont des signaux impulsionnels de forme sech². Avec cette forme d'impulsion, la non-linéarité dans la partie correspondante de la fibre compense la dispersion du signal optique. La transmission des solitons est modélisée de façon connue par l'équation de Schrôdinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus ou gigue Gordon-Haus, impose une limite théorique à la qualité ou au débit des transmissions par solitons.

Pour arriver à dépasser ces limite, il est possible d'utiliser une modulation synchrone des signaux solitons, à l'aide de modulateurs semi-conducteurs. Cette technique limite intrinsèquement le débit de la liaison solitons, du fait de la limite supérieure de la bande passante des modulateurs semi-conducteurs. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase. Il a enfin été proposé, pour assurer la régénération signaux solitons, d'utiliser des absorbants saturables.

Par ailleurs, pour augmenter le débit des systèmes de transmission à fibre optique à signaux solitons, il a aussi été proposé d'utiliser un multiplexage de longueur d'onde (en anglais "wavelength division multiplexing ou WDM). Dans ce cas, il est considéré comme avantageux d'utiliser des filtres guidants glissants du type Fabry Perot, qui sont entièrement compatibles avec des signaux mutliplexés en longueur d'onde. En revanche, l'utilisation de modulateurs synchrones ou d'absorbants saturables pour la régénération de signaux solitons multiplexés en longueur d'onde est problématique, du fait de la différence de vitesse de groupe entre les signaux des différents canaux.

Un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles $Z_R$ donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks.

Un autre article de O. Leclerc, E. Desurvire et O. Audouin, Optical Fiber Technology, 3 pages 97-116 (1997) précise que dans un tel schéma d'allocation de longueurs d'onde, les temps bit de sous-ensembles de canaux du multiplex sont synchrones à des intervalles sous-multiples de $Z_R$. L'article propose en conséquence de régénérer, à des intervalles plus faibles, des sous-ensembles de canaux du multiplex. Ces solutions permettent des transmissions solitons sur des distances importantes, et par exemple sur des distances transocéaniques.

Les systèmes de transmission à signaux solitons sont particulièrement adaptés à des transmissions à haut débit sur des distances importantes; une des applications de tels systèmes de transmission est donc la transmission transocéaniques, avec des longueurs typiques de quelques milliers de kilomètres.

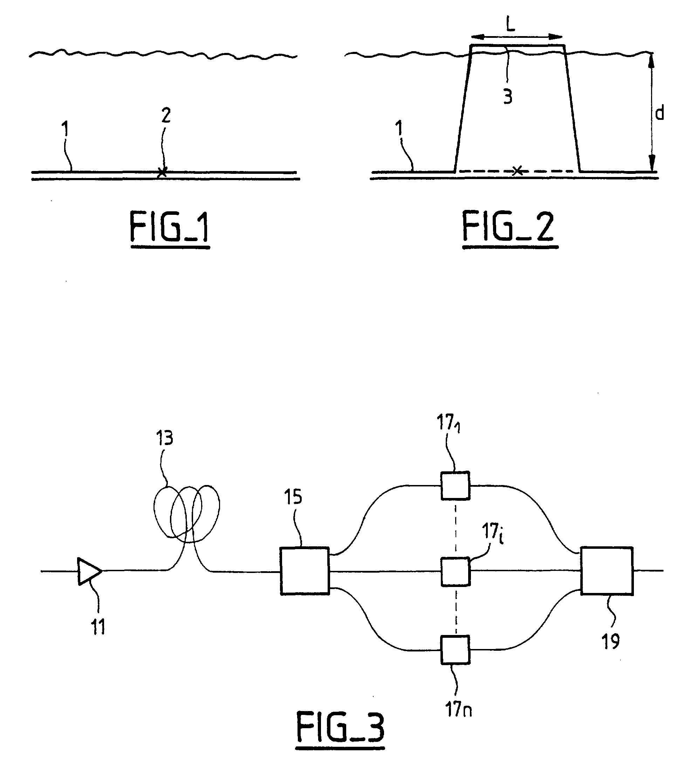

Un des problèmes des systèmes de transmission transocéaniques est la rupture physique du système de transmission, ou un dommage non réparable à distance dans le système de transmission. De façon connue en soi, dans un tel cas, on remonte le câble sous-marin, et on remplace la section endommagée. Cette solution est couramment pratiquée; elle est représentée à titre d'exemple aux figures 1 et 2: comme représenté à la figure 1, le câble 1 repose sur le fond de l'océan et présente une section endommagée 2; cette section peut présenter un dommage quelconque, qui ne soit pas réparable à distance. Dans ce cas, comme représenté à la figure 2, on remonte le câble et on remplace la section endommagée, en posant une longueur L de câble de remplacement 3.

L'invention a pour objet une solution au problème que pose cette technique de réparation pour des systèmes de transmission à fibre optique à signaux solitons et à multiplexage de longueur d'onde, dans lesquels les différentes longueurs d'onde du multiplex sont choisies de sorte à assurer, sur un intervalle donné, un glissement relatif entre les différents canaux sensiblement égal à un multiple du temps bit. En effet, la technique de réparation classique implique d'utiliser une longueur de fibre optique plus importante que la longueur de la section endommagée du système de transmission; ceci est clairement représenté à la figure 2, où une longueur de câble supplémentaire L doit être posée du fait de la profondeur d de l'océan, la réparation s'effectuant en surface. Une telle longueur de câble supplémentaire n'est pas gênante dans un système de transmission classique, et n'a jamais été perçue comme pouvant générer un problème; de fait, la longueur L est de l'ordre de 1,6 fois la profondeur d, et les effets des longueurs supplémentaires en cause, de l'ordre de quelques kilomètres, sont largement en dessous des contraintes des systèmes de transmission classiques. Toutefois, pour un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit, une telle longueur de fibre optique supplémentaire peut induire un glissement relatif des différents canaux, dont les temps bits ne sont plus exactement synchrones en arrivant au répéteur.O. Leclerc et al., Investigation into the robustness of 100 Gbit/s (5x20Gbit/s) regenerated WDM soliton transoceanic transmission to line breaks and repairs, Electronics Letters 33 (18), pp. 1568-1570 (28.08.1997), ainsi que E. Desurvire et al., Transoceanic Regenerated Soliton Systems : Design for over 100 Gbit/s Capacities, Suboptic '97, pages 438-447 décrit page 442 l'effet d'une longueur de câble de réparation sur le facteur Q des différents canaux d'un système de transmission à solitons et à multiplexage de longueur d'ondes. Ces articles concluent que les effets d'une telle longueur de câble supplémentaire sont absorbés après environ 2 Mm de propagation. Ces résultats ne sont pas transposables aux cas de ruptures au voisinage des extrémités de la liaison, du fait notamment qu'une propagation sur 2 Mm est nécessaire pour retrouver les résultats; cet article ne propose donc pas de solution applicable à des ruptures au voisinage des extrémités de la liaison; en outre, il n'est pas forcément acceptable d'avoir en un endroit donné de la ligne une pénalité même locale sur la qualité de la liaison.

La présente invention propose une solution originale et simple à ce problème. Elle permet d'éviter le décalage des canaux, et de maintenir la synchronicité des canaux aux répéteurs. Elle assure une qualité de liaison qui reste bonne sur toute la longueur de la ligne; elle s'applique à des ruptures en tout point de la liaison.

L'invention propose en outre une solution au problème des pertes dans une telle longueur supplémentaire de fibre; ces pertes n'étaient pas auparavant perçues comme gênantes; elles peuvent néanmoins l'être pour des systèmes de transmission à signaux solitons et à multiplexage de longueur d'onde, dans la mesure où la perte peut être plus importante pour des lignes à retard et des multiplexeurs / démultiplexeurs que pour la fibre de transmission.

Plus précisément, l'invention propose un procédé de réparation d'un système de transmission à fibre optique à multiplexage de longueur d'onde et à signaux solitons, dans lequel les différentes longueurs d'onde ($\lambda_1$ à $\lambda_n$) du multiplex sont choisies de sorte à assurer, sur un intervalle ($Z_R$) donné, un glissement relatif entre les différents canaux sensiblement égal à un multiple du temps bit, comprenant les étapes

- d'introduction d'une longueur supplémentaire de fibre optique dans le système de transmission et
- de compensation des effets de cette longueur supplémentaire sur le glissement relatif des différents canaux du multiplex.

Avantageusement, l'étape de compensation comprend l'application de retards ($\Delta\tau_1$ à $\Delta\tau_n$) aux différents canaux du multiplex, de sorte le glissement de chacun des canaux du multiplex par rapport à un canal de référence soit sensiblement un multiple du temps bit.
Dans un mode de réalisation, l'étape de compensation comprend l'application d'un retard nul à un canal de référence et l'application de retards ($\Delta\tau_1$ à $\Delta\tau_n$) aux autres canaux du multiplex, de sorte que le glissement de chacun des autres canaux du multiplex par rapport au canal de référence est sensiblement égale à zéro ou au temps bit.
Dans le cas où le système de transmission est un système de transmission à dispersion de pente de compensation, le canal de référence est de préférence choisi au milieu du spectre de longueur d'onde du multiplex. On applique alors avantageusement à chaque canal de longueur d'onde inférieure à celle du canal de référence un retard égal au glissement du canal de référence par rapport audit canal. Le procédé comprend de préférence l'application à chaque canal de longueur d'onde supérieure à celle du canal de référence d'un retard égal à la différence entre le temps bit et le glissement dudit canal par rapport au canal de référence.
Dans le cas où le système de transmission est un système de transmission sans dispersion de pente de compensation, le canal de référence est de préférence choisi au début du spectre de longueur d'onde du multiplex. On applique alors avantageusement à chaque canal de longueur d'onde supérieure à celle du canal de référence un retard égal à la différence entre le temps bit et le glissement dudit canal par rapport au canal de référence.
De préférence, ladite longueur supplémentaire de fibre optique est constituée de fibre optique à décalage de dispersion.
On prévoit avantageusement une étape d'amplification des signaux du multiplex.
Dans un mode de réalisation, pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec $k_i$ un entier dépendant du canal.

L'invention propose encore un dispositif de réparation d'un système de transmission à fibre optique à multiplexage de longueur d'onde et à signaux solitons, dans lequel les différentes longueurs d'onde ($\lambda_1$ à $\lambda_n$) du multiplex sont choisies de sorte à assurer, sur un intervalle ($Z_R$) donné, un glissement relatif entre les différents canaux sensiblement égal à un multiple du temps bit, comprenant

- une longueur supplémentaire de fibre optique dans le système de transmission et
- des moyens de compensation des effets de cette longueur supplémentaire sur le glissement relatif des différents canaux du multiplex.

De préférence, les moyens de compensation comprennent des moyens de démultiplexage, des moyens d'application de retards ($\Delta\tau_1$ à $\Delta\tau_n$) aux différents canaux du multiplex, et des moyens de remultiplexage

Dans un mode de réalisation, les moyens de compensation comprennent des moyens d'application de retards ($\Delta\tau_1$ à $\Delta\tau_n$) aux différents canaux du multiplex, lesdits retards étant choisis de sorte que le glissement de chacun des canaux du multiplex par rapport à un canal de référence soit sensiblement un multiple du temps bit.

On peut aussi prévoir que les moyens de compensation comprennent des moyens d'application d'un retard nul à un canal de référence et d'application de retards ($\Delta\tau_1$ à $\Delta\tau_n$) aux autres canaux du multiplex, de sorte que le glissement de chacun des autres canaux du multiplex par rapport au canal de référence est sensiblement égal à zéro ou au temps bit.

Le canal de référence peut être choisi au milieu du spectre de longueur d'onde du multiplex. Dans ce cas, le retard de chaque canal de longueur d'onde inférieure à celle du canal de référence est de préférence égal au glissement du canal de référence par rapport audit canal dans la longueur supplémentaire de fibre optique. Le retard de chaque canal de longueur d'onde supérieure à celle du canal de référence est alors avantageusement égal à la différence entre le temps bit et le glissement dudit canal par rapport au canal de référence dans la longueur supplémentaire de fibre optique.

Le canal de référence peut aussi être choisi au début du spectre de longueur d'onde du multiplex. Dans ce cas, le retard de chaque canal de longueur d'onde supérieure à celle du canal de référence est de préférence égal à la différence entre le temps bit et le glissement dudit canal par rapport au canal de référence dans la longueur supplémentaire de fibre optique.

Dans un mode de réalisation, ladite longueur supplémentaire de fibre optique est constituée de fibre optique à décalage de dispersion.

On peut prévoir en outre des moyens d'amplification des signaux du multiplex.

D'autres caractéristiques et avantages de l'invention apparaîtront à la lecture de la description qui suit de modes de réalisation de l'invention, donnée à titre d'exemple et en référence aux dessins annexés qui montrent:

- figure 1, une représentation schématique d'un système de transmission sous-marin;
- figure 2, une représentation schématique d'une technique classique de réparation du système de transmission de la figure 1;
- figure 3, un dispositif de réparation selon l'invention.

L'invention s'applique à un système de transmission à fibre optique à signaux solitons et à multiplexage de longueur d'onde, dans lequel les différentes longueurs d'onde du multiplex sont choisies de sorte à assurer, sur un intervalle donné, un glissement relatif entre les différents canaux sensiblement égal à un multiple du temps bit. Pour cela, on peut utiliser les solutions d'allocation de longueurs d'onde décrits dans les articles de E. Desurvire et O. Leclerc mentionnés plus haut.

Un tel schéma d'allocation de longueurs d'ondes assure, à intervalles réguliers $Z_R$ le long de la fibre, un glissement relatif entre les différents canaux sensiblement égal à un multiple du temps bit. Ceci peut s'exprimer, pour chaque canal, par la formule:

$$(k_i . T - T/4) < \delta\tau_i . Z_R < (k_i . T + T/4)$$

où T est le temps bit, $k_i$ un entier dépendant du canal, et $\delta\tau_i$ le glissement du canal i par rapport au canal 1. Cette formule traduit le fait qu'à des intervalles $Z_R$, les décalages entre les différents canaux provoqués par le glissement sont, à un quart de temps bit près, des multiples entiers du temps bit. On assure ainsi une coïncidence exacte ou quasi exacte des temps bits avec un intervalle de $Z_R$, dans la mesure où les temps bits coïncident exactement ou quasi exactement à l'émission. Dans un tel schéma d'allocation des longueurs d'onde, des modulateurs peuvent être placés à des intervalles de $Z_R$, ou encore à des intervalles plus faibles, comme décrit dans l'article de O. Leclerc, ou encore dans la demande de brevet déposée le même jour sous le titre Systèmes de transmission à fibre optique à signaux solitons et à multiplexage de longueur d'onde.

La précision dans le positionnement des modulateurs dans un tel schéma d'allocation est de l'ordre de 1% de $Z_R$, pour assurer une régénération correcte des différents canaux, comme décrit par exemple dans l'article de O. Leclerc, E. Desurvire et O. Audouin, Robustness of 80 Gbit/s (4 X 20 Gbit/s) Regenerated WDM Soliton Transoceanic Transmission to Practical System Implementation, Optical Fiber Technology, vol. 3 n° 2 page 117 et s. (1997); elle est en tout état de cause inférieure à la longueur supplémentaire de fibre optique ajoutée dans une réparation du type de celle décrite en référence aux figures 1 et 2. Comme expliqué plus haut, une telle technique de réparation n'est donc pas applicable directement à un tel système de transmission à fibre optique à signaux solitons et à multiplexage de longueur d'onde, où les différentes longueurs d'onde du multiplex sont choisies de sorte à assurer, sur un intervalle donné, un glissement relatif entre les différents canaux sensiblement égal à un multiple du temps bit.

L'invention propose une solution à ce problème. Elle propose de compenser les effets du glissement dans la longueur de fibre optique supplémentaire introduite dans le système de transmission, de sorte à ce que le glissement subi par chaque canal du fait de la réparation soit sensiblement un multiple du temps bit.

La figure 3 montre un premier mode de réalisation d'un dispositif de réparation ou cavalier ("jumper" en langue anglaise) selon l'invention; le dispositif de la figure 3 comprend un amplificateur 11, typiquement un amplificateur à fibre optique dopée à l'erbium (EDFA), dont l'entrée est destinée à être reliée au système de transmission d'un côté de la rupture; la sortie de l'amplificateur est reliée à une extrémité d'une longueur supplémentaire de fibre 13, qui est typiquement un fibre à décalage de dispersion (DSF ou "dispersion shifted fiber"); l'autre extrémité de la fibre 13 est reliée à un démultiplexeur 15; en sortie, le démultiplexeur 15 fournit les signaux des différents canaux $\lambda_l$ à $\lambda_n$ du multiplex à des retards $17_l$ à $17_n$; les signaux retardés des différents canaux sont remultiplexés par un multiplexeur 19, dont la sortie est destinée à être reliée au système de transmission de l'autre côté de la rupture.

Les retards $17_l$ à $17_n$ sont choisis de sorte à ce que le glissement d'un canal du multiplex, par rapport à un canal de référence, soit un multiple du temps bit; ceci assure un même agencement relatif des temps bit des différents canaux du multiplex avant et après le dispositif de réparation; en d'autres termes, le dispositif de réparation est transparent du point de vue de la position relative des temps bits.

Le choix de fibre DSF pour la longueur de fibre supplémentaire permet d'utiliser le dispositif de l'invention pour la réparation de systèmes avec ou sans compensation de la dispersion (DSC ou non-DSC). Le glissement entre le canal j et le canal k (j>k) dans la longueur de fibre DSF peut s'écrire

$$\Delta\tau_{k,j} = L_R \cdot d'_0 \cdot \Delta\lambda_{k,j} \cdot (\Delta\lambda_{k,j} + 2 \cdot \Delta\lambda_{k,0})/2$$

avec $L_R$ la longueur supplémentaire de fibre;
$d'_0$ la dispersion de la longueur supplémentaire de fibre;
$\Delta\lambda_{k,j}$ la différence entre les longueurs d'onde $\lambda_k$ et $\lambda_j$ des canaux d'ordre k et j;
$\Delta\lambda_{k,0}$ la différence entre la longueur d'onde $\lambda_k$ du canal d'ordre k et la longueur d'onde de dispersion nulle dans la longueur de fibre supplémentaire.

Pour un système de transmission à compensation de dispersion, l'extraction d'horloge pour la régénération s'effectue de préférence par rapport à un canal situé au milieu du spectre, car c'est celui qui subit le moins de collisions. Le canal de référence ne subissant pas de retard $\Delta\tau_i$ est donc de préférence situé au milieu du spectre du multiplex, dans un système DSC; on minimise ainsi le nombre de collisions sur le canal servant pour la récupération d'horloge.

Dans le cas où le nombre total n de canaux est impair, on choisit donc avantageusement le retard $\Delta\tau_i$ induit par le retard $17_i$ de la façon suivante:

$\Delta\tau_i$ = 0 pour le canal d'ordre i = (n+1)/2;
$\Delta\tau_i = \Delta\tau_{i,(n+1)/2}$ pour chaque canal d'ordre i entre 1 et (n-1)/2;
$\Delta\tau_i$ = T - $\Delta\tau_{(n+1)/2,i}$ pour chaque canal d'ordre i entre (n+3)/2 et n, T étant le temps bit.

De la sorte, le canal d'ordre n+1/2 ne subit pas de retard; chaque canal d'ordre i inférieur à (n+1)/2 subit un retard correspondant au glissement du canal d'ordre (n+1)/2 par rapport au canal d'ordre i, de sorte à présenter un temps bit synchrone avec le canal de référence, Chaque canal d'ordre i supérieur à (n+1)/2 subit un retard tel que son glissement par rapport au canal n+1/2 est égal au temps bit.

De façon analogue, dans le cas où le nombre total n de canaux est pair, on choisit avantageusement le retard $\Delta\tau_i$ induit par le retard $17_i$ de la façon suivante:

$\Delta\tau_i$ = 0 pour le canal d'ordre i = n/2;
$\Delta\tau_i = \Delta\tau_{i,n/2}$ pour chaque canal d'ordre i entre 1 et n/2-1;
$\Delta\tau_i$ = T - $\Delta\tau_{n/2,i}$ pour chaque canal d'ordre i entre n/2+1 et n, T étant le temps bit.

De la sorte, le canal d'ordre n/2 ne subit pas de retard; chaque canal d'ordre i inférieur à n/2 subit un retard correspondant au glissement du canal d'ordre n/2 par rapport au canal d'ordre i, de sorte à présenter un temps bit synchrone avec le canal de référence, Chaque canal d'ordre supérieur à n/2 subit un retard tel que son glissement par rapport au canal n/2 est égal au temps bit.

Pour un système de transmission sans compensation de dispersion, l'extraction d'horloge pour la régénération s'effectue de préférence par rapport à un canal situé au début du spectre, car c'est un tel canal qui subit le moins de collisions. Le canal de référence ne subissant pas de retard $\Delta\tau_i$ est donc de préférence situé au début du spectre du multiplex; on minimise ainsi le nombre de collisions sur le canal servant pour la récupération d'horloge.

On choisit donc avantageusement le retard $\Delta\tau_i$ induit par le retard $17_i$ de la façon suivante:

$\Delta\tau_i$ = 0 pour le canal d'ordre i = 1;

$\Delta\tau_i = T - \Delta\tau_{1,i}$ pour chaque canal d'ordre i différent de 1.

De la sorte, le canal d'ordre 1 ne subit pas de retard, et les autres canaux subissent un retard tel que leur glissement par rapport au canal 1 est égal au temps bit.

Avantageusement, le dispositif de la présente invention est fourni sous forme prête à l'emploi, avec des longueurs supplémentaire de fibre optique déterminées; on peut par exemple prévoir des longueurs de fibres de 2,5, 5 , 8 ou 11 km, correspondant à des profondeurs de 1,3, 3 , 5 et 7 km.

Bien entendu, la présente invention n'est pas limitée aux exemples et modes de réalisation décrits et représentés, mais elle est susceptible de nombreuses variantes accessibles à l'homme de l'art. Ainsi, la position relative de l'amplificateur, de la longueur de fibre, et des différents retards peut varier; l'amplificateur n'est pas toujours nécessaire.

Le schéma d'allocation de longueurs d'onde n'est aucunement limité aux exemples décrits. Il faut aussi noter que l'on peut, par rapport au mode de réalisation décrits, ajouter ou enlever des filtres ou des amplificateurs, en fonction des besoins. Enfin, l'invention a été décrite dans le cas d'une transmission monodirectionnelle. Elle s'applique à l'évidence à une transmission bidirectionnelle.

## Revendications

1. Procédé de réparation d'un système de transmission à fibre optique à multiplexage de longueur d'onde et à signaux solitons, dans lequel les différentes longueurs d'onde ($\lambda_1$ à $\lambda_n$) du multiplex sont choisies de sorte à assurer, sur un intervalle ($Z_R$) donné, un glissement relatif entre les différents canaux sensiblement égal à un multiple du temps bit, comprenant les étapes

   - d'introduction d'une longueur supplémentaire (13) de fibre optique dans le système de transmission et caractérisé en ce qu'il comprend l'étape
   - de compensation des effets de cette longueur supplémentaire sur le glissement relatif des différents canaux du multiplex.

2. Procédé selon la revendication 1, caractérisé en ce que l'étape de compensation comprend l'application de retards ($\Delta\tau_1$ à $\Delta\tau_n$) aux différents canaux du multiplex, de sorte le glissement de chacun des canaux du multiplex par rapport à un canal de référence soit sensiblement un multiple du temps bit.

3. Procédé selon la revendication 1, caractérisé en ce que l'étape de compensation comprend l'application d'un retard nul à un canal de référence et l'application de retards ($\Delta\tau_1$ à $\Delta\tau_n$) aux autres canaux du multiplex, de sorte que le glissement de chacun des autres canaux du multiplex par rapport au canal de référence est sensiblement égale à zéro ou au temps bit.

4. Procédé selon la revendication 3, caractérisé en ce que le système de transmission est un système de transmission à dispersion de pente de compensation, et en ce que le canal de référence est choisi au milieu du spectre de longueur d'onde du multiplex.

5. Procédé selon la revendication 4, caractérisé en ce qu'il comprend l'application à chaque canal de longueur d'onde inférieure à celle du canal de référence d'un retard égal au glissement du canal de référence par rapport audit canal.

6. Procédé selon la revendication 4 ou 5, caractérisé en ce qu'il comprend l'application à chaque canal de longueur d'onde supérieure à celle du canal de référence d'un retard égal à la différence entre le temps bit et le glissement dudit canal par rapport au canal de référence.

7. Procédé selon la revendication 2 ou 3, caractérisé en ce que le système de transmission est un système de transmission sans dispersion de pente de compensation, et en ce que le canal de référence est choisi au début du spectre de longueur d'onde du multiplex.

8. Procédé selon la revendication 7, caractérisé en ce qu'il comprend l'application à chaque canal de longueur d'onde supérieure à celle du canal de référence d'un retard égal à la différence entre le temps bit et le glissement dudit canal par rapport au canal de référence.

9. Procédé selon l'une des revendications 1 à 8, caractérisé en ce que ladite longueur supplémentaire de fibre optique est constituée de fibre optique à décalage de dispersion.

10. Procédé selon l'une des revendications 1 à 9, caractérisé en ce qu'il comprend en outre une étape d'amplification des signaux du multiplex.

11. Procédé selon l'une des revendications 1 à 10, caractérisé en ce que pour toute longueur d'onde $\lambda_i$ du multiplex, et pour un intervalle ($Z_R$), la différence $\delta\tau_i$ entre le glissement par unité de longueur sur le canal i et sur le premier canal satisfait la relation

$$(k_i.T - T/4) < \delta\tau_i.Z_R < (k_i.T + T/4)$$

avec ki un entier dépendant du canal.

**12.** Dispositif de réparation d'un système de transmission à fibre optique à multiplexage de longueur d'onde et à signaux solitons, dans lequel les différentes longueurs d'onde ($\lambda_1$ à $\lambda_n$) du multiplex sont choisies de sorte à assurer, sur un intervalle ($Z_R$) donné, un glissement relatif entre les différents canaux sensiblement égal à un multiple du temps bit, comprenant

- une longueur supplémentaire (13) de fibre optique dans le système de transmission et caractérisé en ce qu'il comprend en outre
- des moyens (15, 17$_i$, 19) de compensation des effets de cette longueur supplémentaire sur le glissement relatif des différents canaux du multiplex.

**13.** Dispositif selon la revendication 12, caractérisé en ce que les moyens de compensation comprennent des moyens de démultiplexage, des moyens d'application de retards ($\Delta\tau_1$ à $\Delta\tau_n$) aux différents canaux du multiplex, et des moyens de remultiplexage

**14.** Dispositif selon la revendication 12 ou 13, caractérisé en ce que les moyens de compensation comprennent des moyens d'application de retards ($\Delta\tau_1$ à $\Delta\tau_n$) aux différents canaux du multiplex, lesdits retards étant choisis de sorte que le glissement de chacun des canaux du multiplex par rapport à un canal de référence soit sensiblement un multiple du temps bit.

**15.** Dispositif selon la revendication 12 ou 13, caractérisé en ce que les moyens de compensation comprennent des moyens d'application d'un retard nul à un canal de référence et d'application de retards ($\Delta\tau_1$ à $\Delta\tau_n$) aux autres canaux du multiplex, de sorte que le glissement de chacun des autres canaux du multiplex par rapport au canal de référence est sensiblement égal à zéro ou au temps bit.

**16.** Dispositif selon la revendication 15, caractérisé en ce que le canal de référence est choisi au milieu du spectre de longueur d'onde du multiplex.

**17.** Dispositif selon la revendication 16, caractérisé en ce que le retard de chaque canal de longueur d'onde inférieure à celle du canal de référence est égal au glissement du canal de référence par rapport audit canal dans la longueur supplémentaire (13) de fibre optique.

**18.** Dispositif selon la revendication 16 ou 17, caractérisé en ce que le retard de chaque canal de longueur d'onde supérieure à celle du canal de référence est égal à la différence entre le temps bit et le glissement dudit canal par rapport au canal de référence dans la longueur supplémentaire (13) de fibre optique.

**19.** Dispositif selon la revendication 15, caractérisé en ce que le canal de référence est choisi au début du spectre de longueur d'onde du multiplex.

**20.** Dispositif selon la revendication 19, caractérisé en ce que le retard de chaque canal de longueur d'onde supérieure à celle du canal de référence est égal à la différence entre le temps bit et le glissement dudit canal par rapport au canal de référence dans la longueur supplémentaire (13) de fibre optique.

**21.** Dispositif selon l'une des revendications 12 à 20, caractérisé en ce que ladite longueur supplémentaire de fibre optique est constituée de fibre optique à décalage de dispersion.

**22.** Dispositif selon l'une des revendications 12 à 21, caractérisé en ce qu'il comprend en outre des moyens (11) d'amplification des signaux du multiplex.

**Claims**

**1.** A method of repairing an optical fiber transmission system using soliton signals and wavelength division multiplexing, in which the various wavelengths, $\lambda_1$ to $\lambda_n$, of the multiplex are selected to ensure that over a given interval $Z_R$, the relative slip between the various channels is substantially equal to a multiple of the bit time, the method comprising the following steps:

. inserting an additional length (13) of optical fiber in the transmission system; and characterized in that it comprises the step of:
. compensating for the effects of said additional length on the relative slip between the various channels of the multiplex.

**2.** A method according to claim 1, characterized in that the compensation step comprises applying time delays, $\Delta\tau_1$ to $\Delta\tau_n$, to the various channels of the multiplex so that the slip of each channel of the multiplex relative to a reference channel is substantially equal to a multiple of the bit time.

**3.** A method according to claim 1, characterized in that the compensation step comprises applying a zero time delay to a reference channel and in applying time delays, $\Delta\tau_1$ to $\Delta\tau_n$, to the other channels of the multiplex so that the slip of each of the other channels of the multiplex relative to the reference channel is substantially equal to zero or to the bit time.

4. A method according to claim 3, characterized in that the transmission system is a transmission system with slope-dispersion compensation, and in that the reference channel is selected to be in the middle of the wavelength spectrum of the multiplex.

5. A method according to claim 4, characterized in that it comprises applying to each channel of wavelength shorter than that of the reference channel a time delay that is equal to the slip of the reference channel relative to said channel.

6. A method according to claim 4 or 5, characterized in that it comprises applying to each channel of wavelength longer than that of the reference channel a time delay equal to the difference between the bit time and the slip of said channel relative to the reference channel.

7. A method according to claim 2 or 3, characterized in that the transmission system is a transmission system without slope-dispersion compensation, and in that the reference channel is selected to be at the beginning of the wavelength spectrum of the multiplex.

8. A method according to claim 7, characterized in that it comprises applying to each channel of wavelength longer than that of the reference channel a time delay equal to the difference between the bit time and the slip of said channel relative to the reference channel.

9. A method according to any one of claims 1 to 8, characterized in that said additional length of optical fiber is constituted by a dispersion-shifted optical fiber.

10. A method according to any one of claims 1 to 9, characterized in that it further includes a step of amplifying the multiplex signals.

11. A method according to any one of claims 1 to 10, characterized in that for each wavelength $\lambda_i$ of the multiplex, and for an interval $Z_R$, the difference $\delta\tau_i$ between the slip per unit length on channel $i$ and on the first channel satisfies the following relationship:

$$(k_i.T - T/4) < \delta\tau_i.Z_R < (k_i.T + T/4)$$

where $k_i$ is an integer depending on the channel.

12. Apparatus for repairing an optical fiber transmission system using soliton signals with wavelength division multiplexing in which the various wavelengths, $\lambda_1$ to $\lambda_n$, of the multiplex are selected so as to ensure that the relative slip between the various channels over a given interval, $Z_R$, is substantially equal to a multiple of the bit time, the apparatus comprising:

. an additional length of optical fiber (13) in the transmission system; and characterized in that it further comprises:
. means (15, 17$_i$, 19) for compensating the effects of said additional length on the relative slip between the various channels of the multiplex.

13. Apparatus according to claim 12, characterized in that the compensation means comprise demultiplexing means, means for applying time delays $\Delta\tau_1$ to $\Delta\tau_n$ to the various channels of the multiplex, and remultiplexing means.

14. Apparatus according to claim 12 or 13, characterized in that the compensation means comprise means for applying time delays $\Delta\tau_1$ to $\Delta\tau_n$ to the various channels of the multiplex, said time delays being selected so that the slip of each of the channels of the multiplex relative to a reference channel is substantially equal to a multiple of the bit time.

15. Apparatus according to claim 12 or 13, characterized in that the compensation means comprise means for applying a zero delay to a reference channel and for applying time delays $\Delta\tau_1$ to $\Delta\tau_n$ to the other channels of the multiplex so that the slip of each of the other channels of the multiplex relative to the reference channel is substantially equal to zero or to the bit time.

16. Apparatus according to claim 15, characterized in that the reference channel is selected to be in the middle of the wavelength spectrum of the multiplex.

17. Apparatus according to claim 16, characterized in that the time delay of each channel of wavelength shorter than that of the reference channel is equal to the slip of the reference channel relative to said channel in the additional length of optical fiber (13).

18. Apparatus according to claim 16 or 17, characterized in that the time delay of each channel of wavelength longer than that of the reference channel is equal to the difference between the bit time and the slip of said channel relative to the reference channel in the additional length of optical fiber (13).

19. Apparatus according to claim 15, characterized in that the reference channel is selected to be at the beginning of the wavelength spectrum of the multiplex.

20. Apparatus according to claim 19, characterized in that the time delay of each channel of wavelength longer than that of the reference channel is equal to the difference between the bit time and the slip of said channel relative to the reference channel in the additional length of optical fiber (13).

21. Apparatus according to any one of claims 12 to 20, characterized in that said additional length of optical fiber is constituted by a dispersion-shifted optical fiber.

22. Apparatus according to any one of claims 12 to 21, characterized in that it further includes means (11) for amplifying the signals of the multiplex.

**Patentansprüche**

1. Verfahren zur Reparatur eines Übertragungssystems mit optischer Faser mit Wellenlängenmultiplexierung und mit Solitonsignalen, bei welchem die verschiedenen Wellenlängen ($\lambda_1$ bis $\lambda_n$) des Multiplex so gewählt sind, dass auf einem gegebenen Intervall ($Z_R$) ein relatives Gleiten zwischen den verschiedenen Kanälen im Wesentlichen gleich einem Vielfachen der Bitzeit sichergestellt wird, das die Schritte umfasst:

   - Einführen einer zusätzlichen Länge (13) an optischer Faser in das Übertragungssystem, und dadurch gekennzeichnet, dass es den Schritt umfasst
   - Kompensation der Wirkungen dieser zusätzlichen Länge auf das relative Gleiten der verschiedenen Kanäle des Multiplex.

2. Verfahren nach Anspruch 1, dadurch gekennzeichnet, dass der Kompensationsschritt die Anwendung von Verzögerungen ($\Delta_1$ bis $\Delta_n$) auf die verschiedenen Kanäle des Multiplex umfasst, so dass das Gleiten jedes der Kanäle des Multiplex in Bezug auf den Bezugskanal im Wesentlichen ein Vielfaches der Bitzeit ist.

3. Verfahren nach Anspruch 1, dadurch gekennzeichnet, dass der Kompensationsschritt die Anwendung einer Verzögerung von Null auf einen Bezugskanal und die Anwendung von Verzögerungen ($\Delta_1$ bis $\Delta_n$) auf die weiteren Kanäle des Multiplex umfasst, so dass das Gleiten jedes der weiteren Kanäle des Multiplex in Bezug auf den Bezugskanal im Wesentlichen gleich Null oder gleich der Bitzeit ist.

4. Verfahren nach Anspruch 3, dadurch gekennzeichnet, dass das Übertragungssystem ein Übertragungssystem mit Dispersion des Anstiegs der Kompensation (dispersion de pente de compensation) ist und dass der Bezugskanal in der Mitte des Wellenlängenspektrums des Multiplex gewählt wird.

5. Verfahren nach Anspruch 4, dadurch gekennzeichnet, dass es die Anwendung einer Verzögerung auf jeden Kanal mit einer Wellenlänge, die kleiner als die des Bezugskanals ist, umfasst, die gleich dem Gleiten des Bezugskanals in Bezug auf den Kanal ist.

6. Verfahren nach Anspruch 4 oder 5, dadurch gekennzeichnet, dass es die Anwendung einer Verzögerung auf jeden Kanal mit einer Wellenlänge, die größer als die des Bezugskanals ist, umfasst, die gleich der Differenz zwischen der Bitzeit und dem Gleiten des Kanals in Bezug auf den Bezugskanal ist.

7. Verfahren nach Anspruch 2 oder 3, dadurch gekennzeichnet, dass das Übertragungssystem ein Übertragungssystem ohne Dispersion des Anstiegs der Kompensation ist und dass der Bezugskanal am Anfang des Wellenlängenspektrums des Multiplex gewählt wird.

8. Verfahren nach Anspruch 7, dadurch gekennzeichnet, dass es die Anwendung einer Verzögerung auf jeden Kanal mit einer Wellenlänge, die größer als die des Bezugskanals ist, umfasst, die gleich der Differenz zwischen der Bitzeit und dem Gleiten des Kanals in Bezug auf den Bezugskanal ist.

9. Verfahren nach einem der Ansprüche 1 bis 8, dadurch gekennzeichnet, dass die zusätzliche Länge an optischer Faser aus einer optischen Faser mit Dispersionsverschiebung besteht.

10. Verfahren nach einem der Ansprüche 1 bis 9, dadurch gekennzeichnet, dass es außerdem einen Schritt der Verstärkung der Signale des Multiplex umfasst.

11. Verfahren nach einem der Ansprüche 1 bis 10, dadurch gekennzeichnet, dass für jede Wellenlänge $\lambda_i$ des Multiplex und für ein Intervall ($Z_R$) die Differenz $\delta\tau_i$ zwischen dem Gleiten pro Einheitslänge auf dem Kanal i und auf dem ersten Kanal die Beziehung erfüllt:

$$(k_i.T - T/4) < \delta\tau_i.Z_R < (k_i.T + T/4)$$

   wobei $k_i$ eine vom Kanal abhängige ganze Zahl ist.

12. Vorrichtung zur Reparatur eines Übertragungssystems mit optischer Faser mit Wellenlängenmultiplexierung und mit Solitonsignalen, bei welchem die verschiedenen Wellenlängen ($\lambda_1$ bis $\lambda_n$) des Multiplex so gewählt sind, dass auf einem gegebenen Intervall ($Z_R$) ein relatives Gleiten zwischen den verschiedenen Kanälen im Wesentlichen gleich einem Vielfachen der Bitzeit sichergestellt wird, welche umfasst:

- eine zusätzliche Länge (13) an optischer Faser im Übertragungssystem, und dadurch gekennzeichnet, dass es außerdem umfasst:

- Mittel (15, 17i, 19) zur Kompensation der Wirkungen dieser zusätzlichen Länge auf das relative Gleiten der verschiedenen Kanäle des Multiplex.

13. Vorrichtung nach Anspruch 12, dadurch gekennzeichnet, dass die Kompensationsmittel Mittel zur Demultiplexierung, Mittel zur Anwendung von Verzögerungen ($\Delta\tau_1$ ä $\Delta\tau_n$) auf die verschiedenen Kanäle des Multiplex und Mittel zur erneuten Multiplexierung umfassen.

14. Vorrichtung nach Anspruch 12 oder 13, dadurch gekennzeichnet, dass die Kompensationsmittel Mittel zur Anwendung von Verzögerungen ($\Delta\tau_1$ à $\Delta\tau_n$) auf die verschiedenen Kanäle des Multiplex umfassen, wobei die Verzögerungen so gewählt werden, dass das Gleiten jedes der Kanäle des Multiplex in Bezug auf einen Bezugskanal im Wesentlichen ein Vielfaches der Bitzeit ist.

15. Vorrichtung nach Anspruch 12 oder 13, dadurch gekennzeichnet, dass die Kompensationsmittel Mittel zur Anwendung einer verzögerung von Null auf einen Bezugskanal und zur Anwendung von Verzögerungen ($\Delta\tau_2$ bis $\Delta\tau_n$) auf die weiteren Kanäle des Multiplex umfassen, so dass das Gleiten jedes der weiteren Kanäle des Multiplex in Bezug auf den Bezugskanal im Wesentlichen gleich Null oder gleich der Bitzeit ist.

16. Vorrichtung nach Anspruch 15, dadurch gekennzeichnet, dass der Bezugskanal in der Mitte des Wellenlängenspektrums des Multiplex gewählt ist.

17. Vorrichtung nach Anspruch 16, dadurch gekennzeichnet, dass es die Verzögerung jedes Kanals mit einer Wellenlänge, die kleiner als die des Bezugskanals ist, gleich dem Gleiten des Bezugskanals in Bezug auf den Kanal in der zusätzlichen Länge (13) an optischer Faser ist.

18. Vorrichtung nach Anspruch 16 oder 17, dadurch gekennzeichnet, dass die Verzögerung jedes Kanals mit einer Wellenlänge, die größer als die des Bezugskanals ist, gleich der Differenz zwischen der Bitzeit und dem Gleiten des Kanals in Bezug auf den Bezugskanal in der zusätzlichen Länge (13) an optischer Faser ist.

19. Vorrichtung nach Anspruch 15, dadurch gekennzeichnet, dass der Bezugskanal am Anfang des Wellenlängenspektrums des Multiplex gewählt ist.

20. Vorrichtung nach Anspruch 19, dadurch gekennzeichnet, dass die verzögerung jedes Kanals mit einer Wellenlänge, die größer als die des Bezugskanals ist, gleich der Differenz zwischen der Bitzeit und dem Gleiten des Kanals in Bezug auf den Bezugskanal in der zusätzlichen Länge (13) an optischer Faser ist.

21. Vorrichtung nach einem der Ansprüche 12 bis 20, dadurch gekennzeichnet, dass die zusätzliche Länge an optischer Faser aus einer optischen Faser mit Dispersionsverschiebung besteht.

22. Vorrichtung nach einem der Ansprüche 12 bis 21, dadurch gekennzeichnet, dass sie außerdem Mittel (11) zur Verstärkung der Signale des Multiplex umfasst.

FIG_1

FIG_2

FIG_3